# EUROPEAN PATENT SPECIFICATION

(11) **EP 0 848 568 B1**
(45) Date of publication and mention of the grant of the patent: **02.03.2005**
(21) Application number: 97309873.4
(22) Date of filing: 08.12.1997
(51) Int. Cl.: H04Q 11/00

(54) **Transmission devices and methods**
Übertragungseinrichtung und -verfahren
Dispositif et procédé de transmission

(30) Priority: 11.12.1996 JP 33060596
(43) Date of publication of application: 17.06.1998
(73) Proprietor: SONY CORPORATION, Tokyo 141 (JP)
(72) Inventor: Osakabe, Yoshio, c/o Sony Corporation, Shinagawa-ku, Tokyo 141 (JP)
(74) Representative: Pilch, Adam John Michael

(56) References cited:
- EP-A- 0 242 030
- WO-A-96/41448
- DE-A- 4 412 958

## Description

This invention relates to transmission devices and methods, such as those which may be capable of two-way transmission of video signals, audio signals, and control signals.

With popularization of cable television (CATV) and satellite broadcasting, it has become possible for ground wave broadcasts, CATV, and satellite broadcasts to be received, signals being transmitted through coaxial cables installed in a home, and for the same or different broadcast channels to be selected in separate respective rooms.

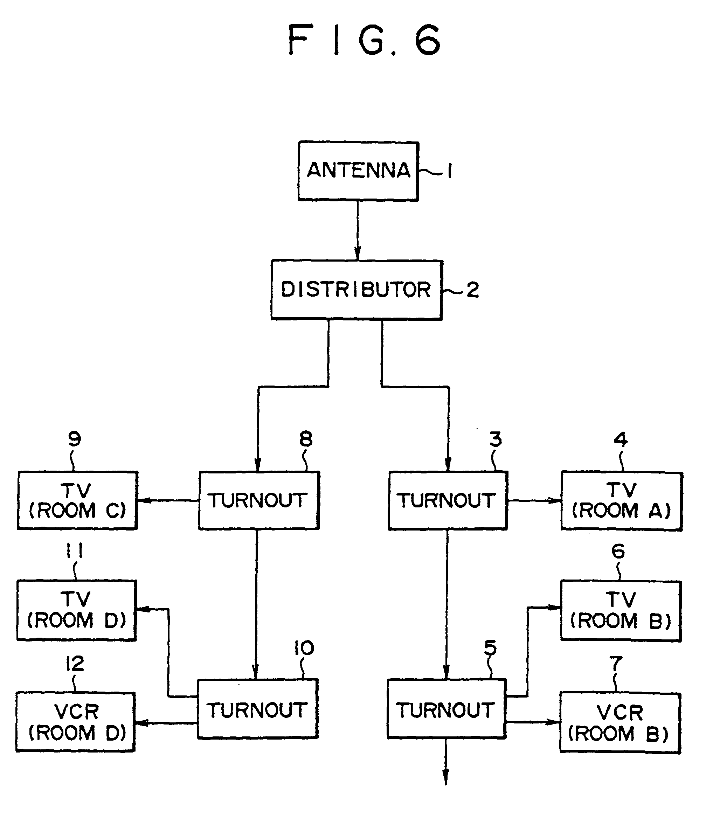

Fig. 6 of the accompanying drawings shows an example of a case that a signal which corresponds to a usual ground broadcast wave received by an antenna 1 is branched into two systems by a turnout or distributor 2, and further the signal is transmitted to rooms including room A to room D in a home through turnouts 3, 5, 8, and 10.

The turnout 3 branches the broadcast signal transmitted from the turnout 2 and transmits the one of the branched broadcast signals to the room A and transmits another branched signal to the turnout 5. A receiver 4 in the room A (abbreviated as TV (room A) hereinafter) tunes in to the frequency of a desired broadcast station out of broadcast signals transmitted through the turnout 3, and displays a program of the broadcast station. The broadcast signal supplied to the turnout 5 is branched and transmitted to a TV receiver 6 in the room B (abbreviated as TV (room B) hereinafter) and to a VCR (video cassette recorder) 7 in the room B (abbreviated as VCR (room B) hereinafter).

The broadcast signal supplied to the turnout 8 from the distributor 2 is branched and transmitted to a TV receiver 9 in the room C (abbreviated as TV (room C) hereinafter) and to the turnout 10. The broadcast signal transmitted to the turnout 10 is transmitted to a TV receiver 11 (abbreviated as TV (room D) hereinafter) and a VCR 12 in the room D.

As described herein above, the signal corresponding to the broadcast wave received by the reception antenna 1 is transmitted to AV apparatuses such as TV receivers and VCRs in the respective rooms, and desired channels are selected in the rooms respectively.

However, in general, it is required to reduce attenuation of signals when an input signal is branched and transmitted in the output direction, on the other hand, some magnitude of attenuation of the signal is allowed when the signal is transmitted in the reverse direction. In Fig. 6, attenuation of the signal is small when the signal is transmitted in the arrow direction, on the other hand, attenuation of the signal is relatively large when the signal is transmitted in the direction opposite to the arrow.

Hence, for example, in the case that an analog video audio signal outputted from the VCR (room B) 7 is modulated to a RF (radio frequency) signal, the RF signal is superimposed on the coaxial cable, and transmitted to the TV 9 in the room C, because of significant attenuation of the signal in the turnouts 5 and 3, the attenuation causes a problem that a signal having a desired signal to noise ratio (referred to as S/N ratio hereinafter) can not be obtained on the TV (room C) 9.

To improve S/N ratio, it is considered that an output of a RF signal is amplified to the level higher than the standard level, however, this method is not preferable because such amplification can cause interfere on other reception apparatuses and is regulated by the radio wave law in many countries.

Alternatively, a method, in which an analog video audio signal is converted to a signal of a prescribed broadcast system, for example, a signal of NTSC system, and the signal is superimposed on a free channel such as UHF not used for broadcast and transmitted by way of radio wave in a home, and received and reproduced by a usual TV receiver, has been used. In this case, it is required that the output should be so suppressed as the output is in compliance with the radio wave law of the country. In this case also, it is difficult to reproduce a signal with good S/N ratio. Further, for the current broadcast system such as NTSC, it is required that a video signal and audio signal should be multiplexed within a band of 6 megahertz (MHz), it is difficult to avoid deterioration of image quality, and the difficulty has been a problem.

A transmission device according to a first aspect of the invention comprises a converter for converting both isochronous and asynchronous packets of digital data of a serial bus to RF signals, and *vice versa*, for performing two-way transmission of the digital data, which comprises information digital data and control digital data, said converter comprising isochronous conversion means for converting said isochronous packet to a signal stream, asynchronous conversion means for converting said asynchronous packet to a command signal, and modulator means for RF-modulating said signal stream and said command signal to produce respective RF signals and transmit those RF signals by different channels.

A transmission method according to a second aspect of the invention involves a method in which both isochronous and asynchronous packets of digital data of a serial bus are converted to RF signals, and *vice versa*, for performing two-way transmission of the digital data, which comprises information digital data and control digital data, said conversion comprising conversion of said isochronous packet to a signal stream, conversion of said asychronous packet to a command signal, and RF-modulation of said signal stream and said command signal to produce respective RF signals, and transmission of those signals by different channels.

A preferred embodiment of the present invention provides a device and method in which video signals and audio signals and also control commands may be transmitted through an existing cable without deterioration.

The invention will now be described by way of example with reference to the accompanying drawings, throughout which like parts are referred to by like references, and in which:
Fig. 1 is a block diagram illustrating an exemplary structure of one embodiment of an AV system to which the transmission device of the present invention may be applied;
Fig. 2 is a diagram for describing the transmission of a signal stream multiplexed in isochronous mode and a command multiplexed in asynchronous mode on the IEEE-1394 serial bus;
Fig. 3 is a block diagram illustrating an exemplary structure of another embodiment of an AV system to which the transmission device of the present invention may be applied;
Fig. 4 is a block diagram illustrating an exemplary structure of yet another embodiment of an AV system to which the transmission device of the present invention may be applied;
Fig. 5 is a block diagram illustrating an exemplary structure of RF/1394 converter; and
Fig. 6 is a block diagram illustrating an exemplary structure of a known AV system.

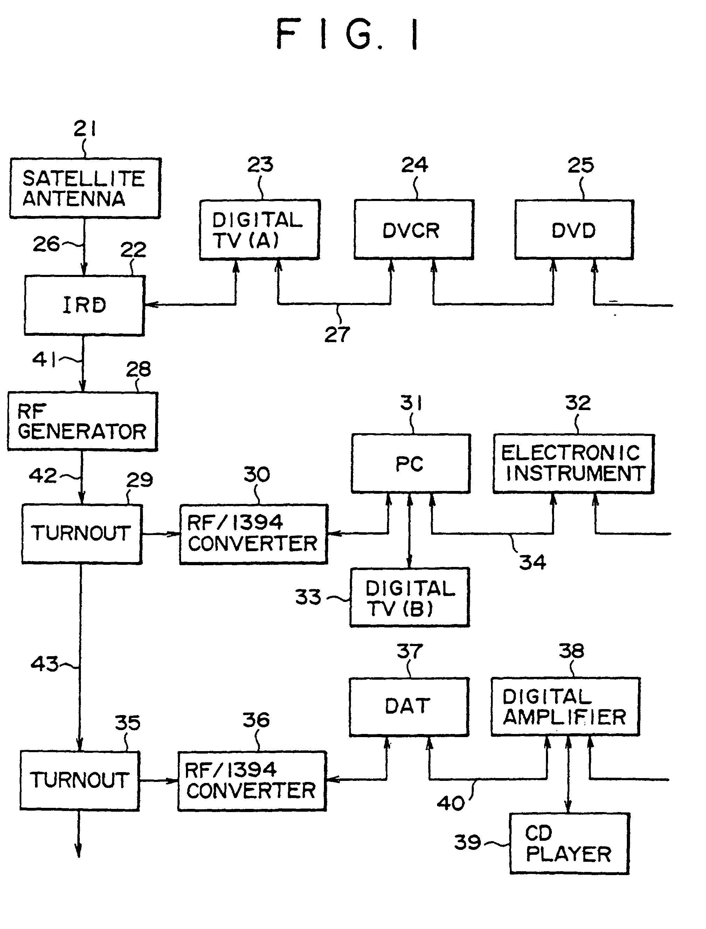

Fig. 1 is a block diagram illustrating an exemplary structure of one embodiment of an AV (audio visual) system to which the transmission device of the present invention may be applied. An integrated receiver-decoder 22 (IRD) receives a signal corresponding to the digital broadcast transmitted by way of satellite broadcast, ground radio wave, or cable TV, performs accounting processing, and then the signal is subjected to decoding and outputted. The digital TV 23 in the room A (digital TV (A)) and VCR 24 (digital video cassette recorder), and DVD 25 (digital versatile disk) are connected to the IRD 22 through IEEE-1394 High Performance Serial Bus 27 (referred to as IEEE-1394 serial bus hereinafter) and the decoded digital signal is supplied to the IRD 22.

An RF (radio frequency) generator 28 converts an input digital signal to an RF signal and outputs it. An turnout 29 branches the input RF signal and outputs it. An RF/1394 converter 30 (conversion means) converts the format of the input RF signal to the IEEE-1494 serial bus format, and outputs it. A personal computer 31 (PC), electronic instrument 32, and digital TV 33 in the room B (digital TV (B)) are connected to a RF/1394 converter 30 through the IEEE-1394 serial bus 34.

A turnout 35 branches the RF signal supplied from the turnout 29 and outputs it. An RF/1394 converter 36 (conversion means) converts the format of the RF signal supplied from the turnout 35 to the IEEE-1394 serial bus format and outputs the resultant signal. A DAT 37 (digital audio tape recorder), digital amplifier 38, and CD player 39 are connected to the RF/1394 converter 36 through an IEEE-1394 serial bus 40.

Next, the operation is described. A radio wave from a broadcasting satellite or communication satellite is received by the satellite antenna 21, and converted to a corresponding electric signal and the converted signal is outputted. To the IRD 22, the digital TV (A) 23, DVCR 24, and DVD 25 are connected through the IEEE-1394 serial bus 27, and a broadcast signal sent to a home by way of a broadcasting satellite, ground wave, or cable TV (CATV) is inputted to the IRD 22, and accounting and decoding processing are performed therein. Herein, it is assumed that a digital broadcast is received from the satellite antenna.

The digital signal subjected to accounting and decoding processing in the IRD 22 is transmitted to respective devices connected to the IRD 22 through the IEEE-1394 serial bus 27. Herein, the IEEE-1394 serial bus is described.

Data transmission of the IEEE-1394 serial bus is categorized into asynchronous data transmission mode (asynchronous mode) and isochronous data transmission mode (isochronous mode) synchronous with isochronous cycle (referred to as cycle hereinafter) of 8 kHz (125 µs) generated from a device which is a cycle master of the bus.

In general, asynchronous mode is used when data are transmitted in mode of not the real time or when control signals for controlling apparatuses or control commands are transmitted. On the other hand, isochronous mode is used when data is transmitted necessarily in real time, for example, dynamic image data and audio data of music and instrument playing are transmitted.

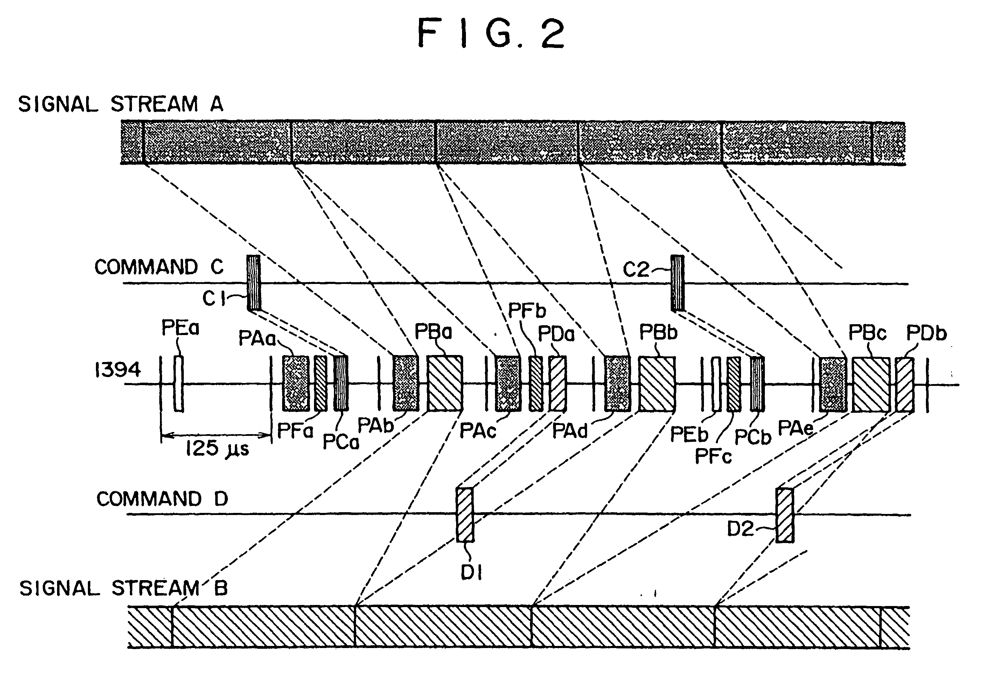

Fig. 2 is a diagram for describing transmission of a signal stream multiplexed in isochronous mode and a control command multiplexed in asynchronous mode through the IEEE-1394 serial bus. The signal stream A is transmitted as packets PAa, PAb, PAc, PAd, and PAe in isochronous mode on the IEEE-1394 serial bus. Packets C1 and C2 of the command C are transmitted as packet PCa and PCb in asynchronous mode on the IEEE-1394 serial bus.

Similarly, the signal stream B is transmitted as packets PBa, PBb, and PBc in isochronous mode on the IEEE-1394 serial bus. Further, packets D1 and D2 of the command Dare transmitted as packet PDa and PDb in asynchronous mode on the IEEE-1394 serial bus. In isochronous mode, respective packet data are transmitted on the IEEE-1394 serial bus at a cycle of-125 µs. The transmission speed of the IEEE-1394 serial bus is 100 megabit/second (Mbps), 200 Mbps, and 400 Mbps.

Respective devices connected to the IEEE-1394 serial bus can transmit video signals, audio signals, and control commands at high speed to other devices. The transmission distance of the IEEE-1394 serial bus is currently 4.5 meters, now development is conducted to extend the distance to 100 meters or longer distance.

In Fig. 1, because the digital TV (B) 33 is not connected directly to the IEEE-1394 serial bus, generally the digital TV (B) 33 can not receive a digital signal decoded by the IRD 22.

The IRD 22 is connected to the RF generator 28 through a cable 41, and supplies the digital signal, that is the digital broadcast signal formed by decoding the signal supplied from the satellite antenna 21, to the RF generator 28. The RF generator 28 RF modulates the digital signal decoded in the IRD 22 by way of a method such as QAM (quadrature amplitude modulation), VSB (vestigial sideband), or QPSK (quadrature phase shift keying) so that the signal is contained within a frequency range of the existing broadcast system (in the case of NTSC system, 6 MHz), up-converts the frequency of the signal to carrier frequency, and outputs the resultant signal to the coaxial cable 42.

The coaxial cables 42 and 43 are the same cable as cables used conventionally in usual homes for wiring, and the turnout 29 is also the same turnout as turnouts generally used for branching an RF signal. The turnout 29 branches the signal inputted through the coaxial cable 42 from the RF generator 28 and outputs the resultant signal. The RF/1394 converter 30 converts the format of the RF signal supplied from the turnout 29 to the IEEE-1394 serial bus format, and supplies the resultant signal to the personal computer (PC) 31, electronic instrument 32, and digital TV (B) 33 through the IEEE-1394 serial bus 34. Thereby, the digital broadcast received by the satellite antenna 21 is viewed on the digital TV (B) 33.

The turnout 35 branches the signal inputted from the turnout 29 through the coaxial cable 43 and outputs it. The RF/1394 converter 36 converts the format of the RF signal supplied from the turnout 35 to the IEEE-1349 serial bus format, and supplies the resultant signal to the DAT 37, digital amplifier 38, and CD player 39.

For example, in the case that an image and sound reproduced by the DVCR 24 is viewed on the digital TV (B) 33, the digital video and audio signal reproduced by the DVCR 24 is supplied to the RF generator 28 through the IRD 22 and coaxial cable 41. In the RF generator 28, the digital video and audio signal supplied from the IRD 22 is subjected to RF modulation, and supplied to the RF/1394 converter 30 through the coaxial-cable 42 and turnout 29.

The signal supplied to the RF/1394 converter 30 is converted to a digital signal of IEEE-1394 serial bus format, and supplied to the digital TV (B) 22 through the IEEE-1394 serial bus 34.

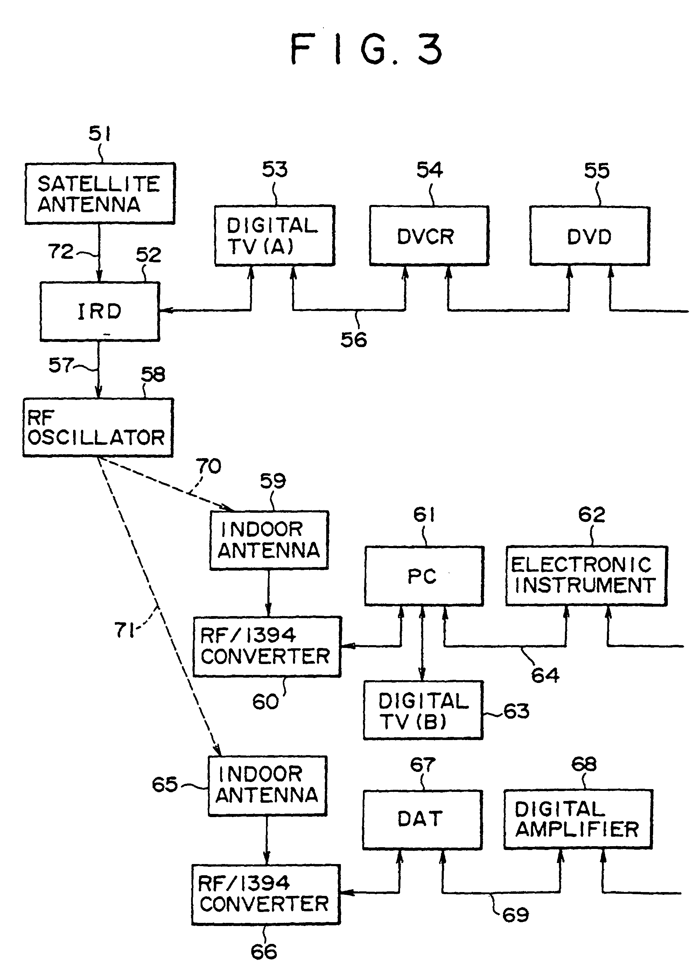

Fig. 3 is a block diagram for illustrating an exemplary structure of another embodiment of an AV system to which the transmission device of the present invention is applied. A satellite antenna 51 receives radio wave from a broadcasting satellite and communication satellite and converts the radio wave to a corresponding signal. An IRD 52 receives the digital broadcast signal supplied from the satellite antenna through a cable not shown in the drawing, performs accounting and decoding processing, and outputs the decoded digital signal. An IEEE-1394 serial bus 56 is connected to the IRD 52, the decoded digital broadcast signal outputted from the IRD 52 is supplied to a digital TV (A) 53, DVCR 54, and DVD 55 through the IEEE-1394 serial bus 56.

An RF oscillator 58 transmits the decoded digital broadcast signal supplied from the IRD 52 by way of radio wave. An indoor antenna 59 receives the radio wave from the RF oscillator 58, converts the radio wave to the original RF signal, and then outputs the resultant signal. An RF/1394 converter 60 (conversion means) converts the RF signal supplied from the indoor antenna 59 to a digital signal of IEEE-1394 serial bus format and outputs it. An IEEE-1394 serial bus 64 is connected to the RF/1394 converter 60, and the digital signal outputted from the RF/1394 converter is supplied to a personal computer (PC) 61, electronic instrument 62, and digital TV (B) 63 through the IEEE-1394 serial bus 64.

An indoor antenna 65 receives the radio wave from the RF oscillator 58, the radio wave is converted to the original RF signal, and it is outputted. An RF/1394 converter 66 (conversion means) converts the RF signal supplied from the indoor antenna 65 to a digital signal of IEEE-1394 serial bus format, and outputs the resultant signal. An IEEE-1394 serial bus 69 is connected to the RF/1394 converter 66, the digital signal outputted from the RF/1394 converter 66 is supplied to a digital amplifier 58 through the IEEE-1394 serial bus 69.

Next, the operation is described. The digital broadcast radio wave received by the satellite antenna 51 is converted to a corresponding signal, and supplied to the IRD 52. Otherwise, a signal corresponding to a digital broadcast from a CATV transmitted through a coaxial cable not shown in the drawing or a digital broadcast by way of ground wave received by an antenna not shown in the drawing is supplied to the IRD 52. The signal supplied from the satellite antenna 51 to the IRD 52 is decoded, and supplied to the digital TV (A) 53, DVCR 54, and DVD 55 connected to the IEEE-1394 serial bus 56.

Further, the decoded signal from the IRD 52 is supplied also to the RF oscillator 58 through the cable 57. The digital signal supplied from the IRD 52 to the IRD oscillator 58 is modulated so that the signal is contained within a frequency range of the existing broadcast system, up-converted to a carrier frequency which does not overlap on the broadcast frequency, and sent out by way of radio wave as an RF signal. The RF signal sent out from the RF oscillator 58 is received by the indoor antenna 59, and converted to a digital signal of IEEE-1394 serial bus format by the RF/1394 converter 60. Then, the signal is supplied to the personal computer (PC) 61 and electronic instrument 62, and digital TV (B) 63 through the IEEE-1394 serial bus 64.

The RF signal sent out from the RF oscillator 58 is received also by the indoor antenna 65, converted to a digital signal of IEEE-1394 serial bus format by the RF/1394 converter 66, and then supplied to the DAT 67 and digital amplifier 68 through the IEEE-1394 serial bus 69.

For example, in the case that an image and sound reproduced by the DVCR 54 are viewed on the digital TV (B) 63, the digital video audio signal reproduced by the DVCR 54 is supplied to the RF oscillator 58 through the IRD 52 and coaxial cable 58. In the RF oscillator 58, the digital video audio signal supplied from the IRD 52 is modulated and then sent out by way of radio wave. The radio wave sent out form the RF oscillator 58 is received by the indoor antenna 59, converted to a corresponding signal, and then supplied to the RF/1394 converter 60.

The signal supplied to the RF/1394 converter 60 is converted to a digital signal of IEEE-1394 serial bus format, and supplied to the digital TV (B) through the IEEE-1394 serial bus 64. Thereby, an image and sound reproduced by the DVCR 54 is viewed on the digital TV (B) 63.

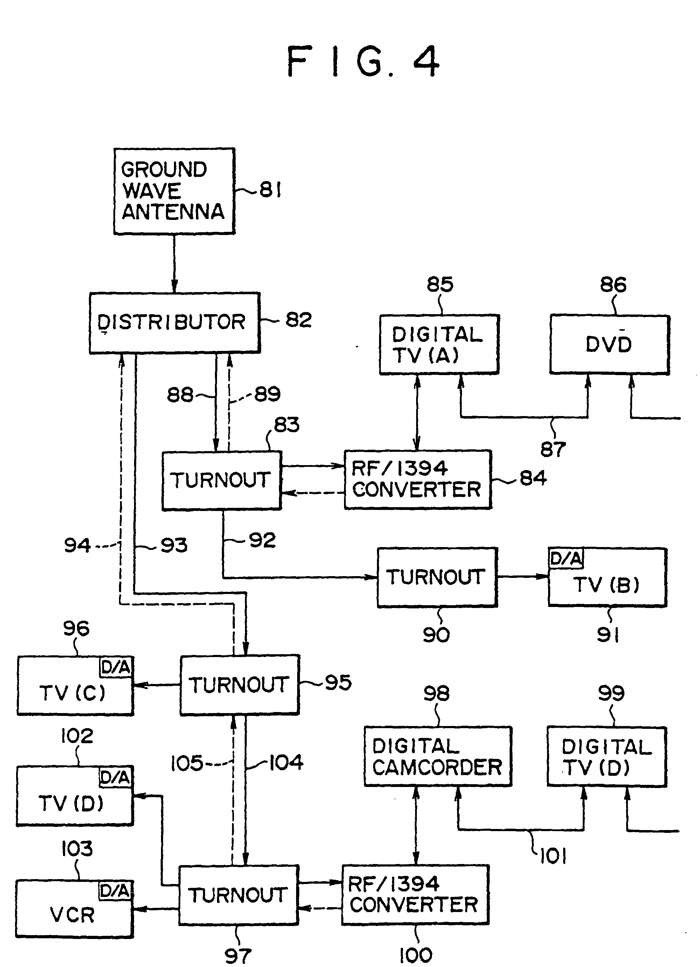

Fig. 4 is a block diagram for illustrating an exemplary structure of yet another embodiment of an AV system to which the transmission device of the present invention is applied. In this embodiment, it is assumed that analog apparatuses and digital apparatuses are both used in a home.

An ground wave antenna 81 receives ground wave broadcast radio wave, and converts it to a corresponding RF signal. A distributor 82 distributes the RF signal supplied from the ground wave antenna 81 to a plurality of apparatuses. A turnout 83 branches the RF signal supplied from the distributor 82, and supplies the branched RF signals to an RF/1394 converter 84 (conversion means) and turnout 90. The RF/1394 converter 84 converts the input RF signal to a digital signal of IEEE-1394 serial bus format.

An IEEE-1394 serial bus 87 is connected to the RF/1394 converter 84, the digital signal supplied from the RF/1394 converter 84 is supplied to a digital TV (A) 58 and DVD 86. A turnout 90 branches the input signal and outputs it.

A turnout 95 branches the RF signal supplied from the distributor 82 and outputs the branched signals. A turnout 97 branches the RF signal inputted from the turnout 95 and supplies the branched RF signals to a TV receiver in the room D (TV (D)) 102, VCR 103, andRF/1394 converter 100 (conversion means). The RF/1394 converter 100 converts the RF signal from the turnout 97 to a digital signal of IEEE-1394 serial bus format, and supplies the converted signal to a digital camcorder 98 and digital TV (D) 99 through an IEEE-1394 serial bus 101.

Next, the operation is described. A radio wave received by the antenna 81 for receiving usual ground wave broadcast is converted to a corresponding RF signal, and supplied to the distributor 82. The RF signal supplied to the distributor 82 is branched, the one branched signal is supplied to the turnout 83 through the existing coaxial cable 88 and the other branched signal is supplied to the turnout 95 through the existing coaxial cable 93. The RF signal supplied to the turnout 83 is branched and supplied to the RF/1394 converter 84 and turnout 90. The RF signal supplied to the RF/1394 converter 84 is converted to a digital signal of IEEE-1394 serial bus format, and then supplied to the digital TV (A) 85 and DVD 86 through the IEEE-1394 serial bus 87.

On the other hand, the RF signal supplied to the turnout 90 through the existing coaxial cable 92 is supplied as it is to the TV (TV (B)) 91, that is an analog apparatus, in the room B. The TV (B) 91 has a built-in D/A converter for converting digital signals to analog signals, and images corresponding to digital RF signals are displayed and sound is outputted.

On the other hand, the RF signal supplied from the distributor to the turnout 95 through the existing coaxial cable 93 is supplied as it is to the TV 96 in the room C, and supplied also to the turnout 97 through the existing coaxial cable 104. The RF signal supplied to the turnout 97 is branched, and supplied to the TV (TV (C)) 102, that is an analog apparatus, in the room C and the VCR 103, and also to the RF/1394 converter 100.

The RF signal supplied to the RF/1394 converter 100 is converted to a digital signal of IEEE-1394 serial bus format, and supplied to the digital camcorder 98 and digital TV (D) 99 through the IEEE-1394 serial bus 101.

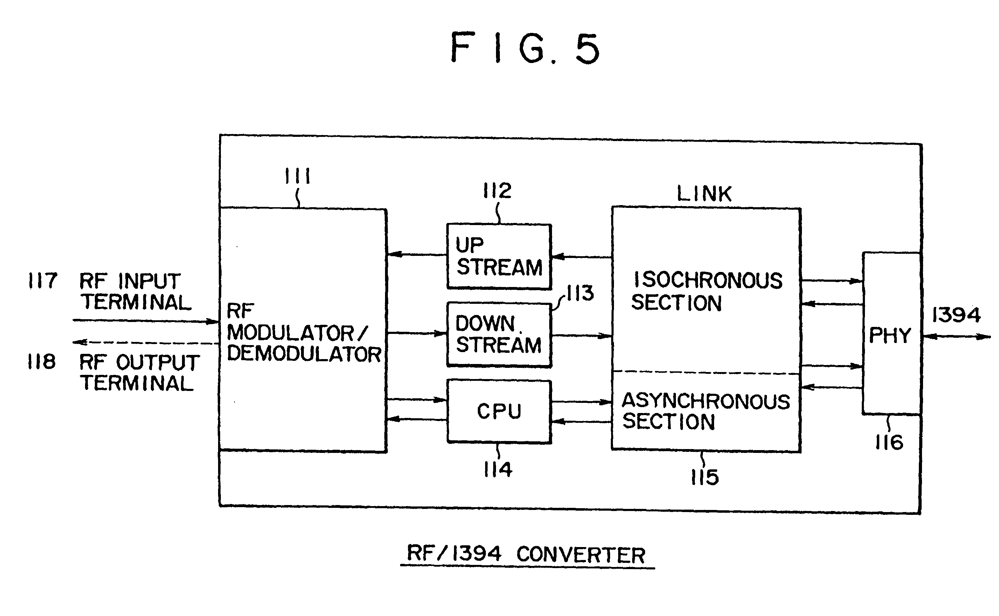

Fig. 5 is a block diagram for illustrating an exemplary structure of an RF/1394 converter 84 or 100 for converting an RF signal to a digital signal of IEEE-1349 serial bus format. An RF modulator/demodulator 111 (band restriction means, superimposition means, demodulation means) demodulates the RF signal inputted from an RF input terminal 117, and converts it to a digital signal stream, RF-modulates the digital signal stream supplied through an upstream 112, and outputs the signal from an RF output terminal 118.

An downstream 113 supplies the RF signal demodulated in the RF modulator/demodulator 111 to an isochronous section of a LINC-IC 115 (signal stream conversion means, packet conversion means, and conversion means). The upstream 112 supplies the digital signal stream supplied from the isochronous section of the LINC-IC 115 to the RF modulator/demodulator 111.

The isochronous section of the LINC-IC 115 converts the input digital signal to an isochronous packet and converts the input isochronous packet to a digital signal stream.

A PHY-IC 116 controls communication between the PHY-IC 116 and an IEEE-1394 serial bus according to the protocol of the IEEE-1394 serial bus, sends out the isochronous packet supplied from the isochronous section of the LINC-IC 115 to the IEEE-1394 serial bus, and supplies the isochronous packet supplied through the IEEE-1394 serial bus to the isochronous section of the INC-IC 115.

A CPU 114 converts the demodulated command RF signal supplied from the RF modulator/demodulator 111 to a command string, and supplies it to the asynchronous section of the LINC-IC 115, and converts the asynchronous packet supplied from the asynchronous section of the LINC-IC 115 to a command string.

The asynchronous section of the LINC-IC 115 converts the command string supplied from the CPU 114 to an asynchronous packet, and converts the asynchronous packet supplied from the PHY-IC 116 to a digital signal stream.

Next, the operation is described. A signal inputted from the RF input terminal 117 is separated into a video signal and audio signal dependently on the frequency band. These signals are input to the RF modulator/demodulator 111 through the RF input terminal 117, the RF modulator/demodulator 111 RF-demodulates the signals and converts them to a digital signal stream, and the digital signal stream is supplied to the isochronous section of the INC-IC 115 through the downstream 113. The digital signal stream is converted to an isochronous packet by the isochronous section of the LINC-IC 115, and supplied to the PHY-IC 116. The isochronous packet supplied to the PHY-IC 116 is sent out to the IEEE-1394 serial bus according to the communication protocol of the IEEE-1394 serial bus with aid of control by the PHY-IC 116.

When an isochronous packet of a video signal and audio signal is supplied to the PHY-IC 116 from the IEEE-1394 serial bus, the PHY-IC 116 supplies the isochronous packet to the isochronous section of the LINC-IC 115. The isochronous packet supplied from the PHY-IC 116 is converted to a digital stream by means of the isochronous section of the LINC-IC 115, and supplied to the RF modulator/demodulator 111 through the upstream 112.

The signal stream of an apparatus such as a digital VCR (DVCR) is transferred at about 30 Mbps, the video audio stream compressed by way of MPEG (Moving Picture Experts Group) 2 system is transferred at 6 Mbps. The digital signal stream is subjected to RF modulation by way of QAM, VSB, or QPSK by means of the RF modulator/demodulator to contain the digital signal stream in the broadcast band (6 MHz for NTSC system), superimposed on a channel of a frequency which is not used for broadcasting from the RF output terminal 118, and transmitted through the coaxial cable. Alternatively, the signal is transmitted by way of radio wave from the antenna.

Next, processing which is performed when a command RF signal is inputted from the RF input terminal 117, or a command signal is inputted from the IEEE-1394 serial bus to the PHY-IC 116 is described.

A command RF signal inputted from the antenna or coaxial cable through the RF input terminal 117 is demodulated by means of the RF modulator/demodulator 111. The CPU 114 converts the demodulated signal to a command string, and supplies it to the asynchronous section of the LINC-IC 115. The command string is converted to an asynchronous packet by means of the asynchronous section of the LINC-IC 115, and supplied to the PHY-IC 116. The asynchronous packet supplied to the PHY-IC 116 is sent out to the IEEE-1394 serial bus according to the protocol of the IEEE-1394 serial bus.

The asynchronous packet corresponding to a prescribed command transmitted to the PHY-IC 116 in asynchronous mode of the IEEE-1394 serial bus is supplied to the asynchronous section of the LINC-IC 115 with aid of control by the PHY 116. The asynchronous packet supplied from the PHY 116 to the asynchronous section of the LINC-IC 115 is converted to a digital signal stream by means of the LINC-IC 115 and supplied to the CPU 114.

The CPU 114 converts the digital signal stream supplied from the asynchronous section of the LINC-IC 115 to a command string, and supplies the command string to the RF modulator/demodulator 111. The RF modulator/demodulator 111 RF-modulates the command string, and the RF-modulated command string is superimposed on a free channel for command which is different from channels for video audio signals, and transmitted through a coaxial cable or transmitted by way of radio wave.

As described hereinbefore, by sending out isochronous packet and asynchronous packet data of the serial bus for two-way transmission of digital data through conversion to the RF signal, it is possible to transmit images, sound, and commands from a prescribed apparatus to other apparatuses in a home through existing coaxial cables or existing indoor antennas.

In the case of the AV system shown in Fig. 1, a signal from a prescribed apparatus can be transmitted to other apparatuses connected downstream in the signal transferring direction branched by means of a turnout. Herein, conversely, the case that a signal is transmitted from a prescribed apparatus to other apparatuses by transmitting a signal in the direction opposite to the downstream direction branched by means of a turnout is described with reference to Fig. 4.

For example, it is assumed that a user in the room D views images and sound reproduced by the DVD 86 on the digital TV (D) 99.

First, a command for indicating reproduction of the DVD 86 is sent out from the digital TV (D) 99 by way of an asynchronous packet on the IEEE-1394 serial bus 101. The asynchronous packet is supplied to the RF/1304 converter 100 and converted to an RF signal. The RF signal is superimposed on an existing free channel of broadcast frequency.

The RF signal superimposed on the existing free channel of broadcast frequency is supplied to the turnout 97, further supplied to the TV (room D) 102 and VCR 103, and also supplied to the turnout 95. Herein, the coaxial cable 105 is the same as the coaxial cable 104, but separated into two in the drawing for convenience of description of the signal flow direction.

The RF signal on which the command is superimposed supplied to the turnout 95 is supplied to the RV (C) 96, and also supplied to the turnout 82 through the coaxial cable 94. Herein, the coaxial cable 94 is the same as the coaxial cable 93, but separated into two in the drawing for convenience of description of the signal flow direction.

When a signal is transmitted in the direction opposite to the normal signal flow direction (in the direction for branching a signal) through the coaxial cables 105 and 94, the signal is attenuated in the turnouts 97 and 95 during transmission, because, for the turnouts 97 and 95, significant attenuation of a signal is permitted during inverse flow of a signal though such significant attenuation of a signal is not permitted during normal flow of a signal, namely flow in branching direction of the signal.

The RF signal supplied to the distributor 82 is attenuated but not seriously because the RF signal is a digital signal. The RF signal supplied to the distributor 82 is supplied to the turnout 83 through the coaxial cable 93, and supplied to the RF/1394 converter 84. The RF/1394 converter 84 RF-demodulates the RF signal supplied from the turnout 83 to convert it to a signal of asynchronous format of IEEE-1394 serial bus, and the resultant signal is supplied to the DVD 86 through the IEEE-1394 serial bus 87.

In the DVD 86, the signal supplied through the IEEE-1394 serial bus 87 is decoded, and it is confirmed that the signal is a command for indicating reproduction (referred to as reproduction command hereinafter).

As described herein above, the DVD 86 which received the reproduction command sends out a video audio signal which is digitally compressed in MPEG2 system to the IEEE-1394 serial bus 87 by way of isochronous packet in response to the reproduction command. The RF/1394 converter 84 converts the isochronous packet corresponding to the compressed video audio signal supplied through the IEEE-1394 serial bus 87 to a digital signal stream, further converts to an RF signal, superimposes it on a free channel of broadcast frequency, and outputs it.

The RF signal sent out from the RF/1394 converter 84 is transmitted from the turnout 83 to the distributor 82 through the coaxial cable 88. Herein, the signal is attenuated because the flow direction of the signal is opposite to the signal branching direction. However, the signal is attenuated not seriously because the signal is a digital signal.

The RF signal on which a video audio signal is superimposed transmitted from the turnout 83 through the coaxial cable 88 is sent out from the turnout 82 to the turnout 95 through the coaxial cable 93. The RF signal supplied to the turnout 95 is supplied to the TV (C) 96, and also supplied to the turnout 97 through the coaxial cable 105. The turnout 97 supplies the RF signal supplied through the coaxial cable 105 to the TV (D) 102, VCR 103, and RF/1394 converter 100.

The RF/1394 converter 100 RF-demodulate the RF signal supplied from the turnout 97, then converts it to an isochronous packet of IEEE-1394 serial bus, and supplies it to the digital TV (D) 99 through the IEEE-1394 serial bus 101.

The digital TV (D) 99 decodes the isochronous packet corresponding to the video audio signal compressed in MPEG2 system transmitted through the IEEE-1394 serial bus 101, and then displays an corresponding image and outputs a corresponding sound.

As described herein above, when a signal is transmitted in the direction opposite to the signal branching direction, attenuation of the signal in a turnout can be made not serious by using a digital signal as the signal, thus video signals, audio signals, and control commands can be transmitted efficiently from a desired apparatus connected with turnouts, coaxial cables, and serial buses to another desired apparatus in a home.

In the above-mentioned respective embodiments, the IEEE-1394 serial bus is used as buses for connecting the respective apparatuses, the bus is by no means limited to the IEEE-1394 serial bus, but other buses may be used.

In the above-mentioned respective embodiments, the case of the use in a home, but the present invention is by no means limited to the case, but may be applied in other environments such as an office.

According to the first aspect transmission device and the fifth aspect transmission method, because data which constitutes at least any one of the isochronous packet and asynchronous packet of the serial bus for performing two-way transmission of a digital data is converted to an RF signal, the video signal, audio signal, and control command are transmitted through the existing coaxial cables without serious deterioration of signals.

According to the second aspect reception device, because the conversion means demodulates the RF-modulated digital signal stream and converts it to a signal of isochronous packet format of the serial bus for performing two-way transmission of the digital data, between an apparatus connected with the serial bus and another apparatus connected with the serial bus, high quality video digital signal, audio digital signal, and control command can be transmitted between them.

According to the third aspect reception device, because the conversion means demodulates the RF-modulated control command and converts it to a signal of isochronous packet format of the serial bus for performing two-way transmission of the digital data, between an apparatus connected with the serial bus and another apparatus connected with the serial bus, high quality video digital signal, audio digital signal, and control command can be transmitted between them.

According to the fourth aspect reception device, because the demodulation means demodulates a signal of a prescribed broadcast frequency transmitted through a coaxial cable to a digital signal stream or control command dependently on the above-mentioned involved broadcast frequency, between an apparatus connected with the serial bus and another apparatus connected with the serial bus, high quality video digital signal, audio digital signal, and control command can be transmitted between them.

## Claims

1. A transmission device **characterised by** comprising a converter for converting both isochronous and asynchronous packets of digital data of a serial bus (1394) to RF signals, and *vice versa*, for performing two-way transmission of the digital data, which comprises information digital data and control digital data, said converter comprising isochronous conversion means (115 - isochronous section) for converting said isochronous packet to a signal stream, asynchronous conversion means (114, 115 - asynchronous section) for converting said asynchronous packet to a command signal, and modulator means (111) for RF-modulating said signal stream and said command signal to produce respective RF signals and transmit those RF signals by different channels.

2. A transmission device as claimed in claim 1, wherein said isochronous packet is composed of information digital data corresponding to an audio signal or video signal.

3. A transmission device as claimed in claim 1, wherein said isochronous packet is composed of information data formed by decoding digital data corresponding to an audio signal or a video signal.

4. A transmission device as claimed in claim 1, comprising means for restricting the RF-modulated signal stream to a broadcast frequency band.

5. A transmission device as claimed in claim 1, wherein said asynchronous packet is composed of control digital data corresponding to a control command.

6. A transmission device as claimed in claim 1, which comprises superimposition means for superimposing said RF signals produced from said signal stream and said command signal on respective different broadcast waves.

7. A transmission device as claimed in claim 6, wherein said RF signal produced from said command signal and superimposed on a broadcast wave by said superimposition means is transmitted through a coaxial cable.

8. A transmission device as claimed in claim 6, wherein said RF signal produced from said command signal and superimposed on a broadcast wave by said superimposition means is transmitted by way of a radio wave having a transmission output magnitude smaller than a certain regulated output magnitude.

9. A transmission device as claimed in claim 1, which is operative to transmit each of said RF signals by way of a respective radio wave.

10. A transmission device as claimed in any one of the preceding claims, wherein said converter comprises demodulator means (111) for demodulating respective RF signals to produce a digital signal stream and a command signal, and wherein said isochronous conversion means (115 - isochronous section) is operative to convert said digital signal stream to an isochronous packet, said asynchronous conversion means (114, 115 - asynchronous section) is operative to convert said command signal to an asynchronous packet, and output means (116) is provided for outputting said isochronous and asynchronous packets.

11. A transmission device according to claim 10, wherein demodulator means (111) is operative to demodulate an RF signal having a prescribed broadcast frequency to a digital signal stream or command signal in dependence on said broadcast frequency.

12. A transmission device as claimed in any one of the preceding claims, wherein said serial bus is an IEEE-1394 serial bus.

13. A transmission method **characterised in that** both isochronous and asynchronous packets of digital data of a serial bus (1394) are converted to RF signals, and *vice versa*, for performing two-way transmission of the digital data, which comprises information digital data and control digital data, said conversion comprising conversion of said isochronous packet to a signal stream, conversion of said asynchronous packet to a command signal, RF-modulation of said signal stream and said command signal to produce respective RF signals, and transmission of those signals by different channels.

14. A transmission method according to claim 13, comprising demodulating respective RF signals to produce a digital signal stream and a command signal, converting said signal stream to an isochronous packet, and converting said command signal to an asynchronous packet.

15. A transmission method according to claim 14, wherein said demodulating step comprises demodulating an RF signal having a prescribed broadcast frequency to a digital signal stream or command signal in dependence on said broadcast frequency.

## Patentansprüche

1. Übertragungsvorrichtung, **dadurch gekennzeichnet, dass** sie einen Umsetzer zur Umsetzung von isochronen und asynchronen Paketen digitaler Daten von einem seriellen Bus (1394) in HF-Signale und umgekehrt für die Ausführung einer Zwei-Wege-Übertragung der digitalen Daten aufweist, die digitale Informationsdaten und digitale Steuerdaten umfassen,
wobei der betreffende Umsetzer eine Isochron-Umsetzeinrichtung (115 - Isochron-Abschnitt) zur Umsetzung des genannten isochronen Pakets in einen Signalstrom, eine Asynchron-Umsetzeinrichtung (114, 115 - Asynchron-Abschnitt) zur Umsetzung des genannten asynchronen Pakets in ein Befehlssignal und eine Modulatoreinrichtung (111) zur HF-Modulation des genannten Signalstromes und des genannten Befehlssignals für die Erzeugung der jeweiligen HF-Signale aufweist und jene HF-Signale über unterschiedliche Kanäle überträgt.

2. Übertragungsvorrichtung nach Anspruch 1, wobei das genannte isochrone Paket aus einem Audiosignal oder Videosignal entsprechenden digitalen Informationsdaten besteht.

3. Übertragungsvorrichtung nach Anspruch 1, wobei das genannte isochrone Paket aus Informationsdaten besteht, die durch Decodieren von einem Audiosignal oder einem Videosignal entsprechenden digitalen Daten gebildet sind.

4. Übertragungsvorrichtung nach Anspruch 1, umfassend eine Einrichtung zur Beschränkung des HF-modulierten Signalstroms auf ein Sende- bzw. Übertragungsfrequenzband.

5. Übertragungsvorrichtung nach Anspruch 1, wobei das genannte asynchrone Paket aus einem Steuerbefehl entsprechenden digitalen Steuerdaten bestehen.

6. Übertragungsvorrichtung nach Anspruch 1, umfassend eine Überlagerungseinrichtung zur Überlagerung der aus dem genannten Signalstrom und dem genannten Befehlssignal erzeugten HF-Signale auf jeweils unterschiedlichen Sende- bzw. Übertragungswellen.

7. Übertragungsvorrichtung nach Anspruch 6, wobei das aus dem genannten Befehlssignal erzeugte und durch die genannte Überlagerungseinrichtung einer Sende- bzw. Übertragungswelle überlagerte HF-Signal durch ein Koaxialkabel übertragen wird.

8. Übertragungsvorrichtung nach Anspruch 6, wobei das aus dem genannten Befehlssignal erzeugte und durch die genannte Überlagerungseinrichtung einer Sende- bzw. Übertragungswelle überlagerte HF-Signal mittels einer Funkwelle übertragen wird, die eine Übertragungs-Abgabegröße aufweist, welche kleiner ist als eine gewisse geregelte Abgabegröße.

9. Übertragungsvorrichtung nach Anspruch 1, welche so arbeitet, dass jedes der genannten HF-Signale mittels einer Funkwelle übertragen wird.

10. Übertragungsvorrichtung nach einem der vorhergehenden Ansprüche, wobei der genannte Umsetzer eine Demodulatoreinrichtung (111) zur Demodulation der jeweiligen HF-Signale aufweist, um einen digitalen Signalstrom und ein Befehlssignal zu erzeugen,
wobei die genannte Isochron-Umsetzeinrichtung (115 - Isochron-Abschnitt) derart arbeitet, dass der genannte digitale Signalstrom in ein isochrones Paket umgesetzt wird,
wobei die genannte Asynchron-Umsetzeinrichtung (114, 115 - Asynchron-Abschnitt) derart arbeitet, dass das genannte Befehlssignal in ein asynchrones Paket umgesetzt wird,
und wobei eine Abgabeeinrichtung (116) zur Abgabe der genannten isochronen und asynchronen Pakete vorgesehen ist.

11. Übertragungsvorrichtung nach Anspruch 10, wobei die Demodulatoreinrichtung (111) derart arbeitet, dass ein HF-Signal mit einer vorgeschriebenen Sende- bzw. Übertragungsfrequenz zu einem von der betreffenden Sende- bzw. Übertragungsfrequenz abhängigen digitalen Signalstrom oder Befehlssignal demoduliert wird.

12. Übertragungsvorrichtung nach einem der vorhergehenden Ansprüche, wobei der genannte serielle Bus ein serieller IEEE-1394-Bus ist.

13. Übertragungsverfahren, **gekennzeichnet dadurch, dass** isochrone und asynchrone Pakete digitaler Daten von einem seriellen Bus (1394) in HF-Signale umgesetzt werden und umgekehrt zur Durchführung einer Zwei-Wege-Übertragung der digitalen Daten, die digitale Informationsdaten und digitale Steuerdaten umfassen,
wobei die betreffende Umsetzung eine Umsetzung des genannten isochronen Paketes in einen Signalstrom, eine Umsetzung des genannten asynchronen Pakets in ein Befehlssignal, eine HF-Modulation des genannten Signalstroms und des genannten Befehlssignals zur Erzeugung von jeweiligen HF-Signalen und die Übertragung jener Signale über unterschiedliche Kanäle umfasst.

14. Übertragungsverfahren nach Anspruch 13, umfassend eine Demodulation der jeweiligen HF-Signale zur Erzeugung eines digitalen Signalstroms und eines Befehlssignals, eine Umsetzung des betreffenden Signalstroms in ein isochrones Paket und eine Umsetzung des genannten Befehlssignals in ein asynchrones Paket.

15. Übertragungsverfahren nach Anspruch 14, wobei der genannte Demodulationsschritt eine Demodulation eines eine vorgeschriebene Sende- bzw. Übertragungsfrequenz aufweisenden HF-Signals zu einem von der betreffenden Sende- bzw. Übertragungsfrequenz abhängigen digitalen Signalstrom oder Befehlssignal umfasst.

## Revendications

1. Dispositif de transmission **caractérisé en ce qu'**il comprend un convertisseur pour convertir à la fois des paquets de données numériques isochrone et asynchrone d'un bus série (1394) selon des signaux RF et vice versa, pour réaliser une transmission bidirectionnelle des données numériques, lesquelles données comprennent des données numériques d'information et des données numériques de commande, ledit convertisseur comprenant un moyen de conversion isochrone (115-section isochrone) pour convertir ledit paquet isochrone selon un train de signaux, un moyen de conversion asynchrone (114, 115-section asynchrone) pour convertir ledit paquet asynchrone selon un signal de commande et un moyen de modulateur (111) pour moduler RF ledit train de signaux et ledit signal de commande afin de produire les signaux RF respectifs et afin de transmettre ces signaux RF au moyen de différents canaux.

2. Dispositif de transmission selon la revendication 1, dans lequel ledit paquet isochrone est constitué par des données numériques d'information correspondant à un signal audio ou à un signal vidéo.

3. Dispositif de transmission selon la revendication 1, dans lequel ledit paquet isochrone est constitué par des données d'information qui sont formées en décodant des données numériques correspondant à un signal audio ou à un signal vidéo.

4. Dispositif de transmission selon la revendication 1, comprenant un moyen pour restreindre le train de signaux modulé RF à une bande de fréquences de diffusion.

5. Dispositif de transmission selon la revendication 1, dans lequel ledit paquet asynchrone est constitué par des données numériques de commande correspondant à une commande de contrôle.

6. Dispositif de transmission selon la revendication 1, lequel comprend un moyen de superposition pour superposer lesdits signaux RF qui sont produits depuis ledit train de signaux et ledit signal de commande sur des ondes de diffusion différentes respectives.

7. Dispositif de transmission selon la revendication 6, dans lequel ledit signal RF qui est produit à partir dudit signal de commande et qui est superposé sur une onde de diffusion par ledit moyen de superposition est transmis par l'intermédiaire d'un câble coaxial.

8. Dispositif de transmission selon la revendication 6, dans lequel ledit signal RF qui est produit à partir dudit signal de commande et qui est superposé sur une onde de diffusion par ledit moyen de superposition est transmis au moyen d'une onde radio qui présente une grandeur de sortie de transmission qui est inférieure à une certaine grandeur de sortie régulée.

9. Dispositif de transmission selon la revendication 1, lequel fonctionne pour transmettre chacun desdits signaux RF au moyen d'une onde radio respective.

10. Dispositif de transmission selon l'une quelconque des revendications précédentes, dans lequel ledit convertisseur comprend un moyen de démodulateur (111) pour démoduler des signaux RF respectifs afin de produire un train de signaux numériques et un signal de commande et dans lequel ledit moyen de conversion isochrone (115-section isochrone) fonctionne pour convertir ledit trains de signaux numériques selon un paquet isochrone, ledit moyen de conversion asynchrone (114, 115-section asynchrone) fonctionne pour convertir ledit signal de commande selon un paquet asynchrone et un moyen de sortie (116) est prévu pour émettre en sortie lesdits paquets isochrone et asynchrone.

11. Dispositif de transmission selon la revendication 10, dans lequel un moyen de démodulateur (111) fonctionne pour démoduler un signal RF qui présente une fréquence de diffusion prescrite selon un train de signaux numériques ou un signal de commande en fonction de ladite fréquence de diffusion.

12. Dispositif de transmission selon l'une quelconque des revendications précédentes, dans lequel ledit bus série est un bus série IEEE-1394.

13. Procédé de transmission **caractérisé en ce que** à la fois des paquets de données numériques isochrone et asynchrone d'un bus série (1394) sont convertis selon des signaux RF et vice versa pour réaliser une transmission bidirectionnelle des données numériques, lesquelles données comprennent des données numériques d'information et des données numériques de commande, ladite conversion comprenant la conversion dudit paquet isochrone selon un train de signaux, la conversion dudit paquet asynchrone selon un signal de commande, une modulation RF dudit train de signaux et dudit signal de commande afin de produire des signaux RF respectifs et la transmission de ces signaux au moyen de différents canaux.

14. Procédé de transmission selon la revendication 13, comprenant la démodulation de signaux RF respectifs pour produire un trains de signaux numériques et un signal de commande, la conversion dudit train de signaux selon un paquet isochrone et la conversion dudit signal de commande selon un paquet asynchrone.

15. Procédé de transmission selon la revendication 14, dans lequel ladite étape de démodulation comprend la démodulation d'un signal RF qui présente une fréquence de diffusion prescrite selon un train de signaux numériques ou un signal de commande en fonction de ladite fréquence de diffusion.
